# EUROPÄISCHE PATENTSCHRIFT

(11) **EP 0 659 309 B1**
(45) Veröffentlichungstag und Bekanntmachung des Hinweises auf die Patenterteilung: **22.05.1996**
(21) Anmeldenummer: 93920695.9
(22) Anmeldetag: 08.09.1993
(51) Int. Cl.: H02M 7/217

(54) **GLEICHRICHTERSCHALTUNG**
RECTIFIER CIRCUIT
CIRCUIT REDRESSEUR

(30) Priorität: 10.09.1992 DE 4230350
(43) Veröffentlichungstag der Anmeldung: 28.06.1995
(73) Patentinhaber: FRAUNHOFER-GESELLSCHAFT ZUR FÖRDERUNG DER ANGEWANDTEN FORSCHUNG E.V., D-80636 München (DE)
(72) Erfinder: HAMMERSCHMIDT, Dirk, D-45147 Essen (DE); HOSTICKA, Bedrich, D-47058 Duisburg (DE); DALSASS, Karl-Günther, D-47445 Moers (DE)
(74) Vertreter: Schoppe, Fritz, Dipl.-Ing.
(86) Internationale Anmeldenummer: EP9302429
(87) Internationale Veröffentlichungsnummer: WO9406200

(56) Entgegenhaltungen:
- WO-A-89/05058
- GB-A- 2 004 138

## Beschreibung

Die vorliegende Erfindung bezieht sich auf eine Gleichrichterschaltung mit einem als aktiv steuerbaren Schalter betriebenen Längsregeltransistor der im einleitenden Teil des Anspruchs 1 angegebenen art.

Die am häufigsten eingesetzten Gleichrichterschaltungen arbeiten mit passiven Gleichrichterdioden zur Umwandlung einer eingangsseitigen Wechselsspannung in eine ausgangsseitige, gleichgerichtete Spannung.

Typischerweise haben derartige Diodengleichrichterschaltungen eine nachgeschaltete Längsreglerschaltung. Die sich für eine derartige Schaltung ergebende Energiebilanz, d.h. der Anteil der Verlustleistung in den Gleichrichterdioden und der nachgeschalteten Längsreglerschaltung bezogen auf die ausgangsseitige Leistung des gleichgerichteten Signales ist bekanntermaßen ungünstig.

Eine weitere Verschlechterung des Wirkungsgrades derartiger Schaltungen muß dann in Kauf genommen werden, wenn diese in einer Technologie realisiert wird, die nur über schlechte Gleichrichtdioden verfügt, wie dies beispielsweise bei der MOS -Technologie der Fall ist.

Es gibt seit geraumer Zeit auch Gleichrichtschaltungen mit einem aktiv gesteuerten Schalter, der in der Regel als gesteuerter Längsregeltransistor ausgeführt ist, welche typischerweise eine deutliche Verbesserung des Wirkungsgrades bezogen auf den Wirkungsgrad von Diodengleichrichterschaltungen erlauben. So ist es beispielsweise aus der DE-A-3928499 bekannt, anstelle üblicher Dioden zur Gleichrichtung im Inversbetrieb leitende MOS-Leistungsfeldeffekttransistoren einzusetzen, die einen im eingeschalteten Zustand extrem niedrigen Drain-Source-Widerstand haben. Diese Technologie ist auch dahingehend vorteilhaft, daß die Ansteuerung der MOS-Feldeffekt-Transistoren, die die Längsregeltransistoren bilden, mit extrem niedrigen Steuerleistungen erfolgen kann. Jedoch ist die erforderliche Regelschaltung zur Ansteuerung dieser im Inversbetrieb arbeitenden MOS-Leistungsfeldeffekt-Transistoren vergleichsweise komplex, da sie mehrere Widerstände, eine Zener-Diode, mehrere Widerstände sowie einen Komparator erfordert. Zusätzlich erfordert die bekannte Regelschaltung eine zusätzliche externe Hilfsspannungsquelle, die zwischen dem Schaltungsausgang und einem Eingang der Regelschaltung zu schalten ist. Das Erfordernis der Hilfsspannungsquelle sowie der oben beschriebenen verschiedenartigen Komponenten, wie beispielsweise der Zener-Diode und der Widerstände, steht dem Wunsch einer monolithischen Integrierbarkeit einer derartigen Schaltung entgegen. Bei der bekannten Regelschaltung ist es nicht unproblematisch, die Durchsteuerung des Längsregeltransistors derart vorzunehmen, daß der Durchschaltzeitpunkt des Längsregeltransistors in einer optimalen Beziehung zu der Höhe der ausgangsseitigen Gleichspannung, die von der ausgangsseitigen Last abhängt, steht. Schaltet der Längsregel-transistor innerhalb jedes Zyklus etwas zu früh durch, so kommt es zunächst zu einer Entladung der ausgangsseitigen kapazitiven Last, bevor der eigentliche Ladeprozeß beginnt. Schaltet der Längsregeltransistor zu spät durch, so werden unnötige Verlustleistungen hervorgerufen.

Eine weitere Beschränkung dieser bekannten Gleichrichtertechnologie ist darin zu sehen, daß sie sich nur für die Gewinnung einer gleichgerichteten Spannung aufgrund einer niederfrequenten eingangsseitigen Wechselspannung eignet. Als Gleichrichterschaltung innerhalb eines Systemes für die drahtlose Energieübertragung, das beispielsweise in Bereichen bis mehrere MHz arbeitet, kann diese bekannte Schaltung nicht eingesetzt werden.

Die WO 89/5058 Al zeigt in ihren Figuren 4, 7, 8 und 9 eine Gleichrichterschaltung mit zwei Eingangsanschlüssen, an die eine Wechselspannungsquelle anschließbar ist, zwei Ausgangsanschlüssen zur Abgabe einer gleichgerichteten Spannung an einen ausgangsseitigen Kondensator, einem Längsregeltransistor, dessen gesteuerter Strompfad zwischen einem Eingangsanschluß und einem Ausgangsanschluß geschaltet ist und einer Ansteuerschaltung zur Ansteuerung des Längsregeltransistors. Die Ansteuerschaltung umfaßt zwei FETs unterschiedlicher Leitfähigkeitstypen, wobei die Reihenschaltung der FETs mit den beiden Ausgangsanschlüssen der Gleichrichterschaltung verbunden ist. Mit anderen Worten liegt die Reihenschaltung der FETs parallel zu dem ausgangsseitigen Kondensator. Die Gates der beiden FETs sind miteinander und mit demjenigen Eingangsanschluß der Gleichrichterschaltung verbunden, an den der Längsregeltransistor angeschlossen ist. Der gemeinsame Knoten der beiden FETs ist mit der Steuerelektrode des Längsregeltransistors verbunden.

Ausgehend von diesem Stand der Technik liegt der Erfindung daher die Aufgabe zugrunde, einen Gleichrichter der Art nach WO-A-8905058 für die Regelung der Ausgangsspannung auszubilden, der nur geringe Verlustleistungen hat, als integrierte Gleichrichterschaltung ausgeführt werden kann und auch hochfrequente Ströme gleichrichten kann.

Diese Aufgabe wird durch eine Gleichrichterschaltung gemäß Patentanspruch 1 gelöst.

Die Reglerschaltung wird nicht durch den Transistor M4 realisiert sondern stellt nur das Stellglied dar, das eine Beeinflussung des Pegels des Inverters ermöglicht. Die Ansteuerung des Gates des Transistors M4 kann durch einen beliebigen Regler erfolgen.

Hieraus ergeben sich bei der erfindungsgemäßen Lösung folgende Vorteile:
- Aus der Architektur des Gleichrichters ergeben sich keine Verzögerungszeiten, die zu einer Einschränkung der Hochfrequenztauglichkeit führten.
- Eine zusätzliche Belastung des Gleichrichters durch einen Querstrom entsteht lediglich im Fall der Begrenzung der Ausgangsspannung. Dies bedeutet, daß sich die Last nur dann erhöht, wenn am Gleichrichtereingang überschüssige Leistung verfügbar ist. Hierdurch entsteht eine zusätzliche Querregelung, die die Regelwirkung verstärkt. Dieser Effekt kann bei entsprechender Dimensionierung der Transistoren M3, M4 zur Erweiterung des Regelbereiches genutzt werden.
- Die Hochfrequenztauglichkeit der Schaltung ist von wesentlicher Bedeutung für die Integrierbareit des Glättungskondensators, da dieser bei niederfrequenter Übertragung einen zu hohen Bedarf an Chipfläche hätte.

Weiterbildungen der erfindungsgemäßen geregelten Gleichrichterschaltung sind in den Unteransprüchen definiert.

Nachfolgend werden unter Bezugnahme auf die beiliegenden Zeichnungen bevorzugte Ausführungsformen der geregelten Gleichrichterschaltung gemäß der vorliegenden Erfindung näher erläutert. Es zeigen:
- Fig. 1: ein Blockdiagramm einer Empfangseinheit eines Systemes zur drahtlosen Energieübertragung mit einer Gleichrichterschaltung, zur Darstellung des technologischen Hintergrunds;
- Fig. 2: ein Blockdiagramm einer Empfangseinheit eines Systemes zur drahtlosen Energieübertragung mit einer Gleichrichterschaltung, zur Darstellung des technologischen Hintergrunds;
- Fig. 3: Teil einer ersten Ausführungsform der erfindungsgemäßen geregelten Gleichrichterschaltung mit einem NMOS-Längsregel-transistor;
- Fig. 4: Teil einer zweiten Ausführungsform der erfindungsgemäßen geregelten Gleichrichterschaltung mit einem PMOS-Längsregel-transistor, und
- Fig. 5: eine dritte Ausführungsform der erfindungsgemäßen geregelten Gleichrichterschaltung.

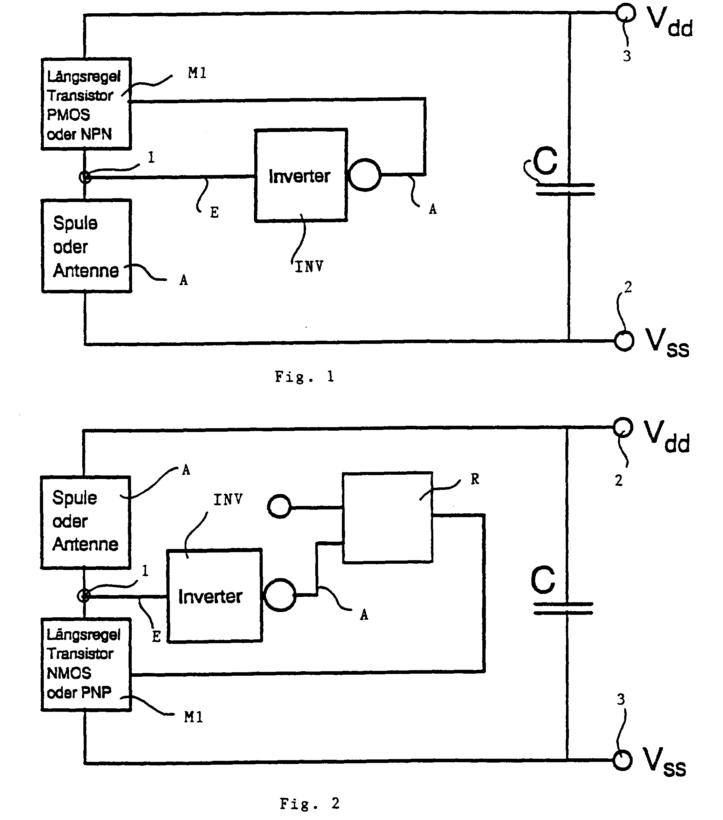

Fig. 1 zeigt die Empfangseinheit eines Systemes zur drahtlosen Energieübertragung mit einer Empfangs spule oder Empfangsantenne A, die eine Wechselspannung zwischen Anschlüssen 1, 2 erzeugt, und mit einer Gleichrichterschaltung, die die Wechselspannung zwischen den Anschlüssen 1, 2 in eine Gleichspannung zwischen den Ausgangsanschlüssen 3, 2 umwandelt. Die Gleichrichterschaltung umfaßt einen Längsregeltransistor M1, dessen gesteuerter Strompfad zwischen einem eingangsseitigen Anschluß 1 für die Wechselspannung und einem der Ausgangsanschlüsse 3 für die Gleichspannung geschaltet ist. Bei der in Fig. 1 gezeigten Ausführungsform handelt es sich bei dem Längsregel-Transistor um einen PMOS-FET oder um einen NPN-Bipolartransistor. Bevorzugt wird man sich eines FET-Transistors M1 bedienen, wobei in diesem Fall dessen Source-Drain-Strecke zwischen den Anschlüssen 1, 3 liegt.

Ferner umfaßt die Gleichrichterschaltung einen Inverter INV, dessen Eingang mit dem Anschluß 1 verbunden ist, der den gemeinsamen Knoten zwischen dem Längsregel-Transistor M1 und der Spule bzw. Antenne A bildet. Der Ausgang des Inverters INV steht mit der Steuerelektrode des Längsregel-Transistors M1 in Verbindung, die im Fall eines FET M1 durch dessen Gate gebildet ist.

Zwischen den Ausgangsanschlüssen 3, 2 liegt ein Kondensator C, durch den das ausgangsseitige Halbwellensignal geglättet wird. Im Fall einer kapazitiven Last kann der Kondensator C auch durch in diesem Fall externe Last gebildet werden.

Die nachfolgend erläuterte Empfangseinheit stimmt weitgehend mit dem unter Bezugnahme auf Fig. 1 erläuterten Ausführungsbeispiel überein. Zur Erläuterung gleicher oder ähnlicher Teile werden daher übereinstimmende Bezugszeichen verwendet, so daß eine wiederholte Beschreibung dieser Teile entfallen kann. Die in Fig. 2 gezeigte Empfangseinheit eines Systemes zur drahtlosen Energieübertragung unterscheidet sich im wesentlichen dadurch von der unter Bezugnahme auf Fig. 1 beschriebenen Empfangseinheit, daß hier als Längsregeltransistor M1 ein NMOS-Transistor oder ein PNP-Bipolar-Transistor eingesetzt wird. Aus dieser inversen Polarität ergibt sich eine entsprechende Vertauschung der Spannungen bzw. Anschlüsse. Ferner ist hier zwischen dem Inverter INV und der Steuerelektrode des Längsregeltransistors M1 eine Regelschaltung R vorgesehen, durch die der Durchlaßwiderstand des Längsregeltransistors M1 gesteuert werden kann. Die Reglerschaltung R bildet das Steuersignal für den Längsregeltransistor M1 aus dem Inverterausgangssignal A und einem Führungssignal gemäß einer Reglerübertragungsfunktion R (A, F).

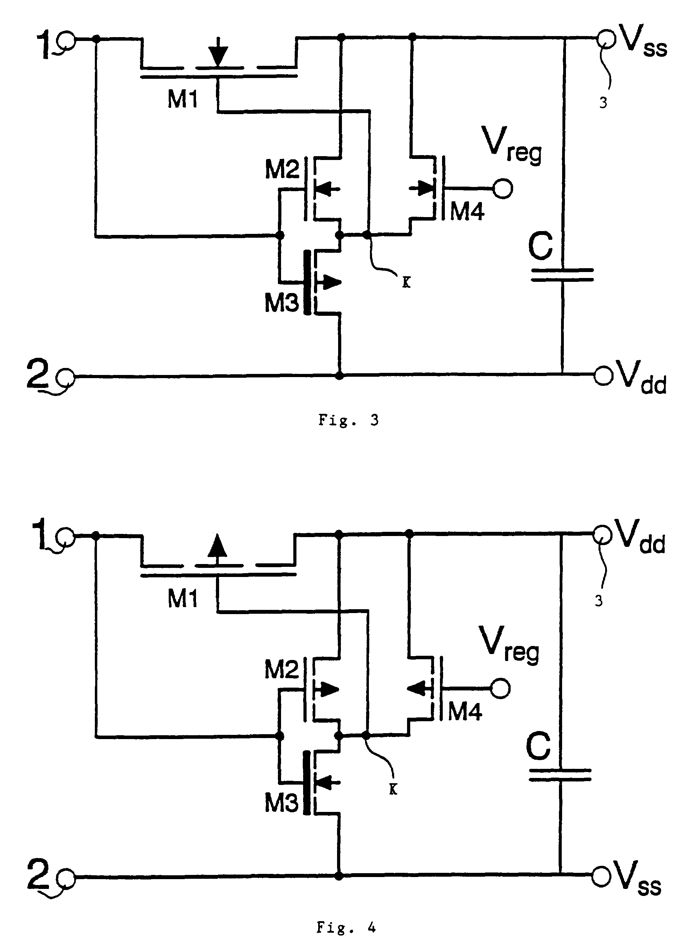

Fig. 3 zeigt eine Detailschaltung der erfindungsgemäßen geregelten Gleichrichterschaltung, bei der der Längsregeltransistor M1 als NMOS-Transistor ausgeführt ist. Der Inverter INV wird durch zwei in Reihe geschaltete FETs M2, M3 gebildet, die zwischen den Ausgangsanschlüssen 3, 2 der Gleichrichterschaltung liegen. Bei dem gezeigten Fall eines NMOS-Längsregeltransistors M1 ist der zweite FET M2, der an den Ausgangsanschluß angeschlossen ist, der mit dem NMOS-Längsregeltransistor M1 verbunden ist, gleichfalls als NMOS-Transistor ausgeführt, während der dritte FET M3 als PMOS-Transistor ausgeführt ist. Der Ausgang der Inverterschaltung, der durch den gemeinsamen Knoten des zweiten und dritten FET M2, M3 gebildet ist, ist mit dem Gate des NMOS-Längsregeltransistors M1 verbunden. Der gemeinsame Gate-Anschluß des zweiten und dritten FET M2, M3 ist mit demjenigen Eingangsanschluß 1 verbunden, der mit dem NMOS-Längsregeltransistor M1 in Verbindung steht.

Die Regelschaltung R ist hier mit einem vierten NMOS-FET M4 verbunden, der parallel zum zweiten NMOS-FET M2 geschaltet ist.

Fig. 4 zeigt eine Gleichrichterschaltung, die sich von der in Fig. 3 gezeigten Gleichrichterschaltung durch jeweils inverse Polaritäten der Transistoren M1, M2, M3, M4 abhebt.

Für den Fachmann ist es offenkundig, daß sich die erfindungsgemäße Gleichrichterschaltung aufgrund der Tatsache, daß sie ausschließlich als MOS-Transistoren realisiert werden kann, herausragend für eine monolithische Integration in CMOS-Technologie eignet.

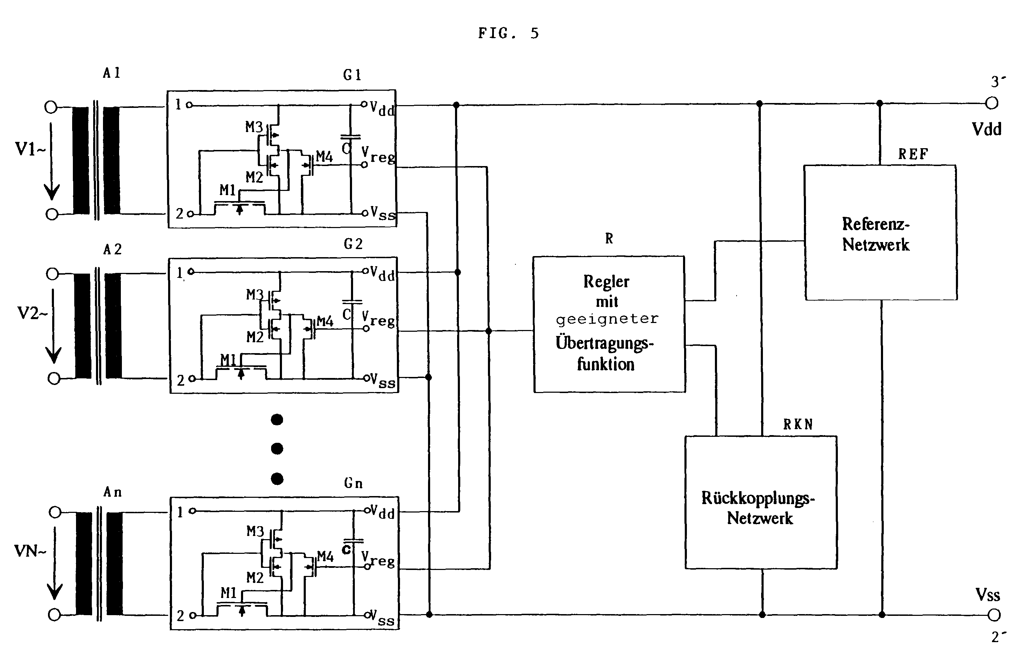

Eine Mehrphasengleichrichterschaltung kann, wie nachfolgend unter Bezugnahme auf Fig. 5 erläutert wird, durch mehrere Gleichrichterschaltungen G der oben beschriebenen Art gebildet sein.

Die in Fig. 5 gezeigte Mehrphasengleichrichterschaltung umfaßt eine Mehrzahl von vorzugsweise miteinander übereinstimmenden Gleichrichterschaltungen G1, G2, .., Gn, die jeweils mit ihren Eingangsanschlüssen 1, 2 an entsprechende Spulen oder Antennen A1, A2, .., An angeschlossen sind.

Ausgangsseitig sind die jeweiligen Gleichrichterschaltungen G1, G2, .., Gn mit ihren Ausgangsanschlüssen parallel an Ausgangsanschlüsse 3', 2' der Mehrphasengleichrichterschaltung geschaltet. Zwischen den Ausgangsanschlüssen 3', 2'der Mehrphasengleichrichterschaltung liegen ein Referenznetzwerk REF und ein Rückkopplupqsnetzwerk RKN, deren Ausgänge einem Regler R mit einer geeigneten Übertragungsfunktion zugeführt werden, welcher ausgangsseitig für sämtliche Gleichrichterschaltungen G1, G2, .., Gn eine gemeinsame Regelspannung V_{reg} liefert, welche den jeweiligen vierten FETs M4 zugeführt wird.

## Patentansprüche

1. Integrierte Gleichrichterschaltung, mit
- zwei Eingangsanschlüssen (1, 2), an die eine Wechselspannungsquelle (A) anschließbar ist,
- zwei Ausgangsanschlüssen (3, 2) zur Abgabe einer gleichgerichteten Spannung,
- einem Längsregeltransistor (M1), dessen gesteuerter Strompfad zwischen einem Eingangsanschluß und einem Ausgangsanschluß (3) geschaltet ist, und
- einer Ansteuerschaltung zur Ansteuerung des Längsregeltransistors (M1), die eine Inverterschaltung (INV; M2, M3) bestehend aus einer Reihenschaltung eines FET (M2) eines ersten Leitfähigkeitstypes und eines FET (M3) eines zweiten Leitfähigkeitstypes umfaßt, wobei die Reihenschaltung der FETs (M2, M3) mit den beiden Ausgangsanschlüssen (3, 2) der Gleichrichterschaltung verbunden ist,
- wobei die Gates der beiden FETs (M2, M3) miteinander und mit demjenigen Eingangsanschluß (1) der Gleichrichterschaltung verbunden sind, an den der Längsregeltransistor (M1) angeschlossen ist, und
- wobei der gemeinsame Knoten (K) der beiden FETs (M2, M3) mit der Steuerelektrode des Längsregeltransistors (M1) verbunden ist,
gekennzeichnet durch die Ausbildung als geregelte Gleichrichterschaltung mit geregelter Ausgangsspannung, enthaltend
- einen weiteren FET (M4), der mit seiner Drain-Source-Strecke parallel zu der Drain-Source-Strecke eines der in Reihe geschalteten FETs (M2,M3) liegt,
- wobei das Gate des weiteren FET (M4) mit einer Reglerschaltung (R) verbunden ist, die die Regelspannung für den Längsregel-transistor (M1) aus der ausgangsseitigen gleichgerichteten Spannung bildet,
- wobei das Gate des weiteren FET (M4) mit der Regelspannung (V_{reg}) beaufschlagt ist, durch die der Durchlaßwiderstand des Längsregeltransistors (M1) steuerbar ist, und
- wobei sämtliche Transistoren (M1,M2,M3,M4) der Gleichrichterschaltung gemeinsam als monolithisch integrierte Schaltung ausgebildet sind.

2. Mehrphasengleichrichterschaltung, gekennzeichnet durch mehrere Gleichrichterschaltungen nach Anspruch 1

3. Empfangseinheit eines Systemes zur drahtlosen Energieübertragung, gekennzeichnet durch
eine Gleichrichterschaltung nach einem der Ansprüche 1 oder 2 , und
eine an die Eingangsanschlüsse (1, 2) der Gleichrichterschaltung angeschlossene Spule oder Antenne (A).

## Claims

1. An integrated rectifier circuit, comprising
- two input terminals (1, 2) which are adapted to have connected thereto an ac voltage source (A),
- two output terminals (3, 2) for outputting a rectified voltage,
- a longitudinal control transistor (M1) whose controlled current path is connected between an input terminal and an output terminal (3), and
- a control circuit used for controlling said longitudinal control transistor (M1) and comprising an inverter circuit (INV; M2, M3) which consists of a series connection of a FET (M2) of a first conductivity type and of a FET (M3) of a second conductivity type, the series connection of the FETs (M2, M3) being connected to the two output terminals (3, 2) of the rectifier circuit,
- the gates of the two FETs (M2, M3) being connected to one another as well as to the input terminal (1) of the rectifier circuit having connected thereto the longitudinal control transistor (M1), and
- the common node (K) of the two FETs (M2, M3) being connected to the control electrode of the longitudinal control transistor (M1),
characterized by a structural design in the form of a controlled rectifier circuit having a controlled output voltage, comprising
- an additional FET (M4) having its drain-source path connected in parallel to the drain-source path of one of the FETs (M2, M3) which are connected in series,
- the gate of said additional FET (M4) being connected to a control circuit (R) forming the control voltage for the longitudinal control transistor (M1) from the rectified voltage on the output side,
- the gate of said additional FET (M4) having applied thereto the control voltage (V_{reg}) by means of which the forward resistance of the longitudinal control transistor (M1) can be controlled, and
- all the transistors (M1, M2, M3, M4) of the rectifier circuit defining in common a monolithic integrated circuit.

2. A multiphase rectifier circuit, characterized by
a plurality of rectifier circuits according to claim 1.

3. A receive unit of a system for wireless power transmission, characterized by
a rectifier circuit according to one of the claims 1 or 2, and
a coil or an antenna (A) connected to the input terminals (1, 2) of the rectifier circuit.

## Revendications

1. Circuit redresseur intégré, avec
- deux connexions d'entrée (1, 2) auxquelles peut être raccordée une source de tension alternative (A),
- deux connexions de sortie (3, 2) destinées à délivrer une tension redressée,
- un transistor de régulation longitudinale (M1) dont le chemin de courant commandé est connecté entre une connexion d'entrée et une connexion de sortie (3), et
- un circuit de commande, destiné à commander le transistor de régulation longitudinale (M1), comprenant un circuit inverseur (INV; M2, M3) composé d'un circuit en série d'un transistor à effet de champ (M2) à premier type de conductivité et d'un transistor à effet de champ (M3) à second type de conductivité, le circuit en série des transistors à effet de champ (M2, M3) étant relié aux deux connexions de sortie (3, 2) du circuit redresseur,
- les portes des deux transistors à effet de champ (M2, M3) étant reliées l'une à l'autre et à la connexion d'entrée (1) du circuit redresseur à laquelle est raccordé le transistor de régulation longitudinale (M1), et
- le noeud commun (K) des deux transistors à effet de champ (M2, M3) étant relié à l'électrode de commande du transistor de régulation longitudinale (M1),
caractérisé par la réalisation sous forme de circuit redresseur régulé à tension de sortie régulée, comportant
- un autre transistor à effet de champ (M4) qui se trouve, par son trajet écoulement-source, en parallèle avec le trajet écoulement-source de l'un des transistors à effet de champ (M2, M3) connectés en série,
- la porte de l'autre transistor à effet de champ (M4) étant reliée à un circuit de régulation (R) qui forme la tension de régulation pour le transistor de régulation longitudinale (M1) à partir de la tension redressée du côté de la sortie,
- la porte de l'autre transistor à effet de champ (M4) étant soumise à l'admission de la tension de régulation (V_{reg}) par laquelle peut être régulée la résistance de passage du transistor de régulation longitudinale (M1), et
- tous les transistors (M1, M2, M3, M4) du circuit redresseur étant réalisés ensemble sous forme de circuit intégré monolithiquement.

2. Circuit redresseur polyphasé, caractérisé par plusieurs circuits redresseurs suivant la revendication 1.

3. Unité de réception d'un système de transmission d'énergie sans fil, caractérisée par
un circuit redresseur suivant la revendication 1 ou 2, et
une bobine ou antenne (A) raccordée aux connexions d'entrée (1, 2) du circuit redresseur.
